# EUROPÄISCHE PATENTSCHRIFT

(11) **EP 2 049 319 B1**
(45) Veröffentlichungstag und Bekanntmachung des Hinweises auf die Patenterteilung: **29.03.2017**
(21) Anmeldenummer: 07765315.2
(22) Anmeldetag: 04.06.2007
(51) Int. Cl.: B29C 47/90

(54) **KALIBRIERVORRICHTUNG FÜR EINE BLASFOLIENANLAGE**
CALIBRATING DEVICE FOR A FILM BLOWING LINE
DISPOSITIF DE CALIBRAGE POUR ÉQUIPEMENT À SOUFFLER UN FILM

(30) Priorität: 13.06.2006 DE 102006027644
(43) Veröffentlichungstag der Anmeldung: 22.04.2009
(73) Patentinhaber: Windmöller & Hölscher KG, 49525 Lengerich/Westf. (DE)
(72) Erfinder: LINKIES, Jürgen, 49536 Lienen (DE); FRISCHE, Holger, 49205 Hasbergen (DE); OBERDALHOFF, Tim, 49536 Lienen (DE)
(86) Internationale Anmeldenummer: PCT/EP2007/055479
(87) Internationale Veröffentlichungsnummer: WO 2007/144289

(56) Entgegenhaltungen:
- EP-A- 1 254 757
- EP-A2- 1 537 973
- DE-A1- 2 847 318
- DE-U1-202005 006 532
- US-A- 4 388 061
- US-A- 4 749 346
- US-A- 4 759 702
- US-A- 5 124 094
- US-A1- 2005 056 973

## Beschreibung

Die Erfindung betrifft eine Kalibriervorrichtung nach dem Oberbegriff des Anspruchs 1.

Solche Kalibriervorrichtungen, häufig auch Kalibrierkörbe genannt, kommen in der Regel in Blasfolienanlagen zum Einbau. In solchen Blasfolienanlagen wird Kunststoffgranulat in Extrudern zum Schmelzen gebracht. Die Schmelze wird anschließend in Blasfolienköpfen kreisförmig verteilt. Damit wird die Schmelze in dem Blasfolienkopf in eine zylindrische Form gebracht. Die Schmelze verlässt nun den Blasfolienkopf durch eine meist kreisförmige Düse, wobei die Schmelze noch nicht oder zumindest nicht vollständig erstarrt ist. Diese Eigenschaft wird ausgenutzt, um den Folienschlauch durch Erzeugen und Aufrechterhalten eines inneren Überdrucks in radialer Richtung aufzuweiten. Um aber den Umfang des Folienschlauches nach dem Aufweiten in engen Grenzen konstant zu halten, wird der Folienschlauch durch eine eingangs erwähnte Kalibriervorrichtung geleitet, welche den Umfang des Folienschlauches begrenzt.

Der Überdruck innerhalb des Folienschlauches wird durch ein Fluid, meist Luft, erzeugt. Neben dem Aufweiten des Folienschlauches hat das Einbringen eines Fluids auch einen Kühleffekt, welcher das Abkühlen und damit das Verfestigen der Schmelze beschleunigt. Aus gleichem Grunde wird in der Regel der Außenumfang des Folienschlauches ebenfalls mit einem Medium wie Luft beaufschlagt, wobei die Luft in Transportrichtung des Folienschlauches strömt.

Die Gebrauchsmusterschrift DE 20 2005 006532 U1 zeigt eine solche Kalibriervorrichtung, welche drehbare und auf dem Außenumfang des Folienschlauches abrollende Führungsrollen umfasst. Der bewegte Folienschlauch treibt also die Führungsrollen an. Unter "Rolle" ist dabei ein drehbares Element zu verstehen, dessen axiale Erstreckung wesentlich größer ist als dessen Durchmesser.

Das Patent US 4,759,702 offenbart eine Vorrichtung zum biaxialen Verstrecken eines Folienschlauches, bei der im Inneren eines expandierten Folienschlauches zu dessen Führung Röllchen angeordnet sind. Diese Röllchen weisen eine axiale Erstreckung auf, die kleiner ist als deren Durchmesser. Die genannte Vorrichtung dient jedoch nicht der Kalibrierung eines frisch extrudierten Folienschlauches.

Das Patent US 4,388,061 zeigt eine Kalibriervorrichtung, gemäß dem Oberbegriff des Anspruchs 1, mit einem an unterschiedliche Umfänge eines Folienschlauchs anpassbarem Führungselement, wobei das Führungselement eine Vielzahl an Röllchen umfasst. Diese bestehen aus Nylon oder einem Kunststoff und sind auf einen flexiblen Draht aufgezogen, welcher einen an den Durchmesser des Folienschlauchs angepassten Kreisbogen beschreibt.
Nachteilig ist bei bekannten Kalibrierkörben allerdings, dass bei bestimmten Produktionsparametern der Folienschlauch nicht immer an den Rollen anliegt, sondern zeitweise von diesen abhebt und später wieder in Kontakt mit diesen tritt. Bei jedem neuen Kontakt muss der Folienschlauch also eine Rolle wieder beschleunigen. Diese dabei wirkenden Kräfte verändern aber den Folienschlauch, was sich später in Streifen oder anderen Beschädigungen des Folienschlauches äußert. Bei herkömmlichen Kalibriervorrichtungen kann es also zu Qualitätseinschränkungen des Folienschlauches kommen.

Die Aufgabe der vorliegenden Erfindung ist es also, eine Kalibriervorrichtung vorzuschlagen, die Qualitätsverschlechterungen des Folienschlauches vermeidet.

Die Aufgabe wird gelöst durch das kennzeichnende Merkmal des Anspruchs 1. Mit dieser Erfindung wird das Vorurteil überwunden, dass man für einen besseren Kontakt zwischen Folienschlauch und Rolle einen größeren Durchmesser der Führungsrolle zu wählen hat, da sich so eine größere Kontaktfläche realisieren lässt. Grundlage der Erfindung ist jedoch die Überlegung, dass die am Außenumfang des Folienschlauches entlang strömende Luft auf einen durch die Führungsrollen gebildeten Luftwiderstand trifft. Die Luft umströmt dabei jede Rolle und ruft dabei ein Luftpolster zwischen Rollen und Folienschlauch hervor, das den Kontakt unterbricht. Dieser Effekt ist umso stärker, je größer der Durchmesser der Rolle ist, da effektiv mehr Luft zwischen der Rolle und des Folienschlauchs hindurch zu strömen trachtet. Durch das Vorsehen von Rollen mit einem Durchmesser von weniger als 40mm Durchmesser wird also der Kontakt zwischen Folienschlauch und Rolle weitgehend aufrechterhalten, wobei sich das Verkleinern der Kontaktfläche nicht nachteilig auswirkt.

Um bei kleiner Kontaktfläche trotzdem ein sicheres Antreiben der Rollen zu erzielen, ist vorgesehen, die Führungsrollen aus einem leichten Material herzustellen, welches zu einem kleinen Drehmoment der Rolle führt. Dazu eignet sich erfindungsgemäß ein faserverstärkter Faserverbundwerkstoff, beispielsweise glasfaserverstärkter Kunststoff (GFK) oder kohlefaserverstärkter Kunststoff (CFK), wobei letzterer bei gleicher Festigkeit leichter ist. Solche Verbundwerkstoffe haben zudem den Vorteil, dass sie keine Wärme leiten, so dass sie kein Kältereservoir darstellen, welches zu einem bereichsweisen Auskühlen und Verfestigen der Kunststoffschmelze führen kann. Solche Führungsrollen werden vorteilhafterweise über besondere Leichtlauflager am Rahmen der Kalibriervorrichtung gelagert.

Ein besonders guter Kompromiss zwischen der wünschenswerten Verkleinerung des Luftwiderstandes und der gleichzeitig in Kauf genommenen Verringerung der Kontaktfläche liegt bei einer Wahl von 22 mm als Durchmesser für die Führungsrollen, weshalb dieser Kompromiss als besonders vorteilhafte Ausführungsform der Erfindung angesehen wird.

In einer weiteren vorteilhaften Ausführungsform werden die Führungsrollen mit einem so genannten "Soft-Touch-Lack" beschichtet, welcher eine fühlbar glattere Oberfläche im Vergleich zu anderen Beschichtungen erzeugt. Auf diese Weise kann, trotz der nominellen Verkleinerung der Kontaktfläche zwischen Folienschlauch und Führungsrollen, die Größe der Kontaktfläche beibehalten oder gar erhöht werden, so dass der Nachteil der kleineren Kontaktfläche zumindest teilweise kompensiert wird.

Weitere Ausführungsbeispiele der Erfindung gehen aus der gegenständlichen Beschreibung und den Ansprüchen hervor.

Die einzelnen Figuren zeigen:
- Fig. 1: Seitenansicht auf Teile einer Blasfolienextrusionsanlage
- Fig. 2: Ausschnitt einer Draufsicht auf eine Kalibriervorrichtung.

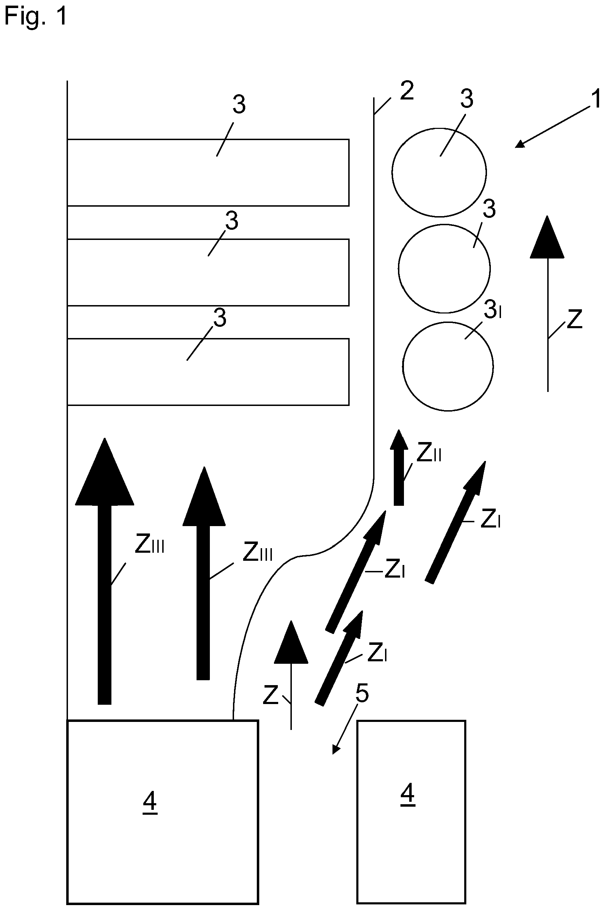

Fig. 1 zeigt schematisch Teile einer Kalibriervorrichtung 1, durch welche der Folienschlauch 2, der in Transportrichtung z transportiert wird, hindurch gelangt. Bestandteile der Kalibriervorrichtung 1 sind die Führungsrollen 3, die um den Umfang des Folienschlauches 2 herum angeordnet sind. Die Drehachsen der Führungsrollen 3 sind dabei orthogonal zur Transportrichtung z des Folienschlauches 2 angeordnet. In Transportrichtung z gesehen können mehrere Führungsrollen 3 hintereinander angeordnet sein. Außerdem können die Führungsrollen dabei auch seitlich versetzt angeordnet werden, so dass möglichst die gesamte Außenfläche des Folienschlauches 2 geführt wird.

Der Folienschlauch 2 tritt aus einer nicht näher dargestellten Ringdüse des Blasfoliendüsenkopfes 4 aus. Um die Ringdüse herum sind in dem Blasfoliendüsenkopf Bohrungen 5 eingebracht, durch die Kühlluft auf den Folienschlauch 2 gegeben wird, wobei die Luft, zumindest anfangs, ebenfalls in Richtung z strömt. Die Luft kann statt durch Bohrungen 5 auch beispielsweise durch separate Blasluftdüsen auf den Folienschlauch 2 geleitet werden. Die Luft strömt entlang des Außenumfangs des Folienschlauches 2, wobei die strömende Luft durch die Pfeile z' repräsentiert wird. Der Pfeil z" repräsentiert den Teil der Luft, der in den Einlaufbereich zwischen Rolle 3' und Folienschlauch 2 einströmt. Es ist unmittelbar einsichtig, dass dieser Teil der Luft größer wird, je größer der Umfang der Rolle 3' ist.

Auch in das Innere des Folienschlauches 2 wird durch Einbringen von Luft, welche durch nicht gezeigte Düsen gelangt, gekühlt. Diese Luftströmung wird durch die Pfeile z'" symbolisiert. Herrscht zudem im Inneren des Folienschlauches ein Überdruck gegenüber dem Außendruck, so weitet sich der Folienschlauch 2 während seines Transportes auf, wobei oft die in Fig. 1 gezeigte Kontur entsteht.

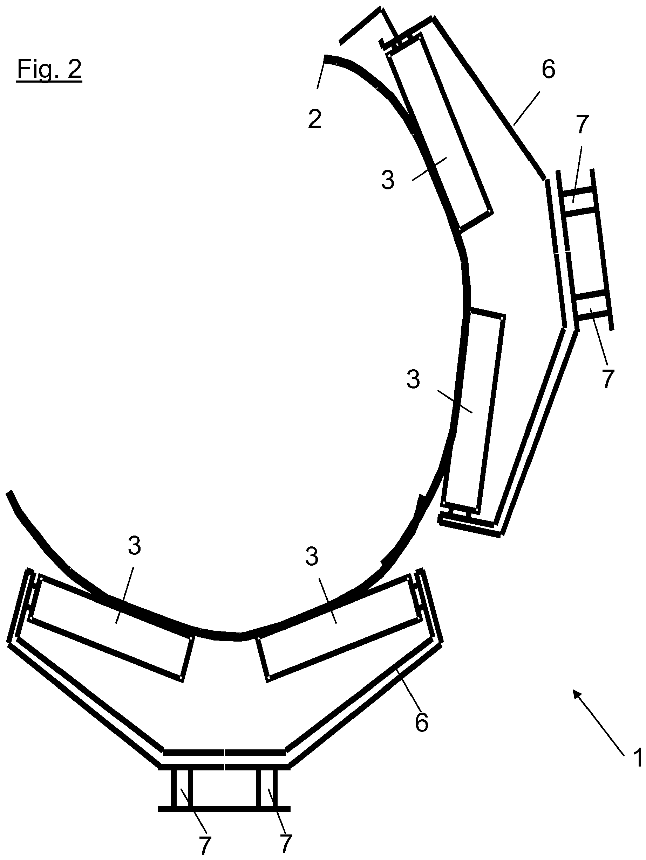

Die Fig. 2 zeigt Ausschnitte aus der Draufsicht auf eine Kalibriervorrichtung 1. Je zwei Führungsrollen 3 werden von einem Rahmen 6 gehalten, so dass die Rollen 3 tangential an dem Folienschlauch 2 anliegen. In dem gezeigten Ausführungsbeispiel sind die Führungsrollen 3 einendig gehalten. Alle Rahmen 6 sind über nicht Arme 7 in einem gemeinsamen, aber nicht gezeigten Gestell gehalten, wobei sich die Arme relativ zum Gestell schwenken lassen, so dass sich die radiale Position der Rollen 3 auf den Durchmesser des Folienschlauches 2 anpassen lassen.

## Patentansprüche

1. Kalibriervorrichtung (1) zum Kalibrieren des Durchmessers eines aus einem Blasfoliendüsenkopf (4) austretenden Folienschlauches (2), bei dem mehrere drehbare Führungsrollen (3) vorgesehen sind, die um den Umfang des Folienschlauches (2) angeordnet sind, wobei die Drehachsen der Führungsrollen (3) in Richtungen verlaufen, die im wesentlichen orthogonal zur Achse des Folienschlauches (2) liegen,
**dadurch gekennzeichnet, dass**
der Durchmesser der Führungsrollen (3) kleiner als 40 mm ist, und die Führungsrollen (3) aus einem faserverstärkten Verbundwerkstoff bestehen.

2. Vorrichtung nach vorstehendem Anspruch,
**dadurch gekennzeichnet, dass**
der Durchmesser der Führungsrollen (3) kleiner als 30 mm ist.

3. Vorrichtung nach einem der vorstehenden Ansprüche,
**dadurch gekennzeichnet, dass**
der Durchmesser der Führungsrollen (3) 22 mm beträgt.

4. Vorrichtung nach einem der vorstehenden Ansprüche,
**dadurch gekennzeichnet, dass**
der Durchmesser der Führungsrollen (3) kleiner als 22 mm ist.

5. Vorrichtung nach einem der vorstehenden Ansprüche,
**dadurch gekennzeichnet, dass**
die Führungsrollen mit einem Soft-Touch-Lack beschichtet sind.

## Claims

1. A calibrating device (1) for calibrating the diameter of a film tube (2) exiting from a blown film nozzle head (4), in which several rotatable guide rollers (3) are provided, which are arranged around the circumference of the film tube (2), wherein the axes of rotation of the guide rollers (3) run in directions, which are essentially orthogonal to the axis of the film tube (2),
**characterized in that**
the diameter of the guide rollers (3) is less than 40 mm, and the guide rollers (3) consist of a fiber-reinforced composite material.

2. A device according to the preceding claim,
**characterized in that**
the diameter of the guide rollers (3) is less than 30 mm.

3. A device according to one of the preceding claims,
**characterized in that**
the diameter of the guide rollers (3) is 22 mm.

4. A device according to one of the preceding claims,
**characterized in that**
the diameter of the guide rollers (3) is less than 22 mm.

5. A device according to one of the preceding claims,
**characterized in that**
the guide rollers are coated with a soft-touch lacquer.

## Revendications

1. Dispositif d'étalonnage (1) pour l'étalonnage du diamètre d'un film tubulaire (2) sortant d'une tête de buse de film soufflé (4), dans lequel plusieurs galets de guidage rotatifs (3) sont prévus, qui sont disposés sur la périphérie de la gaine de film (2), les axes de rotation des galets de guidage (3) s'étendant dans des directions qui sont globalement orthogonales à l'axe du film tubulaire (2),
**caractérisé en ce que**
le diamètre des galets de guidage (3) est inférieur à 40 mm et les galets de guidage (3) sont constitués d'une matière plastique composite renforcée par des fibres.

2. Dispositif selon la revendication précédente,
**caractérisé en ce que** le diamètre des galets de guidage (3) est inférieur à 30 mm.

3. Dispositif selon l'une des revendications précédentes,
**caractérisé en ce que**
le diamètre des galets de guidage (3) est de 22 mm.

4. Dispositif selon l'une des revendications précédentes,
**caractérisé en ce que**
le diamètre des galets de guidage (3) est inférieur à 22 mm.

5. Dispositif selon l'une des revendications précédentes,
**caractérisé en ce que**
les galets de guidage (3) sont revêtus d'une peinture à toucher soyeux.
